# EUROPÄISCHE PATENTANMELDUNG

(11) **EP 2 635 068 A1**
(43) Veröffentlichungstag der Anmeldung: **04.09.2013**
(21) Anmeldenummer: 12157527.8
(22) Anmeldetag: 29.02.2012
(51) Int. Cl.: H04W 36/32

(54) **Verfahren zum Betrieb eines Kommunikationssystems eines industriellen Automatisierungssystems mit mehreren Funk-Basisstationen zur Echtzeit-Datenübermittlung und Kommunikationssystem**

(71) Anmelder: Siemens Aktiengesellschaft, 80333 München (DE)
(72) Erfinder: Rotmensen, Sander, 90518 Altdorf b. Nürnberg (DE)

(57) **Zusammenfassung**

In einem Kommunikationssystem eines industriellen Automatisierungssystems mit mehreren Funk-Basisstationen (202, 203) zur Echtzeit-Datenübermittlung erfolgt bei einem Übergang eines mobilen Kommunikationsgeräts (201, 201', 202'') von einem ersten Bereich (205) in einen zweiten Bereich (206) ein Verbindungswechsel zu einer jeweiligen Funk-Basisstation (202, 203) ausschließlich anhand einer an einer Netzinformationsstation (207) in einem Übergangsbereich zwischen zwei Bereichen (205, 206) bereitgestellten Netzzugangsinformation. Dabei wird die Netzzugangsinformation mittels einer Leseeinheit (213) des mobilen Kommunikationsgeräts (201, 201', 202'') an der Netzinformationsstation (207) erfasst.

## Beschreibung

In verteilten industriellen Automatisierungssystemen ist bei einer Erfassung, Auswertung und Übermittlung von Meß- und Steuerungsdaten ist sicherzustellen, daß vollständige und unveränderte Daten insbesondere bei zeitkritischen industriellen Produktionsprozessen in Echtzeit vorliegen. Absichtliche, unabsichtliche oder durch einen technischen Fehler bedingte Veränderungen sind zu vermeiden, da dies innerhalb eines industriellen Automatisierungssystems zu inkonsistenten Systemzuständen und Systemausfällen mit wirtschaftlich gravierenden Stillstandszeiten führen kann.

Zusätzlich können Unterbrechungen von Kommunikationsverbindungen zwischen Rechnereinheiten eines industriellen Automatisierungssystems zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aus US 2008/0293420 A1 ist ein Verfahren zur Registrierung eines mobilen Kommunikationsgeräts an einer Funk-Basisstation bekannt, bei dem das mobile Kommunikationsgerät ein RFID-Tag umfaßt und eine im RFID-Tag gespeicherte Information an einen der Funk-Basisstation zugeordneten RFID-Empfänger übermittelt. Empfängerseitig wird anhand dieser Information überprüft, ob das mobile Kommunikationsgerät zur Nutzung von Diensten innerhalb eines drahtlosen Breitbandkommunikationssystems registriert ist. Bei positivem Überprüfungsergebnis wird dem mobilen Kommunikationsgerät ein Netzzugriff über die Funk-Basisstation eingeräumt.

In US 2010/0061335 A1 ist ein Verfahren zur Verkürzung eines Roaming-Vorgangs innerhalb eines Funk-Kommunikationssystems beschrieben, bei dem einem mobilen Kommunikationsgerät über das Funk-Kommunikationssystem Kommunikationsdaten mehrerer Funk-Basisstationen verfügbar gemacht werden. Auf Basis dieser Kommunikationsdaten erfolgt eine Kommunikationssteuerung während eines Roaming-Vorgangs, wenn das mobile Kommunikationsgerät von einer Funkzelle zu einer anderen wechselt. Das Funk-Kommunikationssystem umfaßt ferner eine Detektionsstation zur Erfassung von Position und Bewegung des mobilen Kommunikationsgeräts. Auf Basis einer präzisierten Positionsermittlung und Bewegungsschätzung können dem mobilen Kommunikationsgerät insbesondere in einem Übergangsbereich zwischen Funkzellen genauere Informationen über verfügbare Funk-Basisstationen bereitgestellt werden.

Aus US 2010/0075669 A1 ist ein Verfahren zur Durchführung eines Roaming-Vorgangs in einem Funk-Kommunikationssystem bekannt, bei dem ein mit einem ersten Kommunikationsnetz verbundenes mobiles Kommunikationsgerät einen außerhalb des ersten Kommunikationsnetzes erzeugten und übermittelten Trigger zur Aktualisierung von Roaming-Präferenzen empfängt. Dieser Trigger kann beispielsweise mittels eines Barcodes, RFID-Tags oder Nahfeldkommunikation (near-field communication) für das mobile Kommunikationsgerät verfügbar gemacht werden und umfaßt eine Identifikation eines Betreiber eines zweiten Kommunikationsnetzes. Mit dieser Identifikation können die für das mobile Kommunikationsgerät eingestellten Roaming-Präferenzen geändert werden, indem beispielweise das zweite Kommunikationsnetz als bevorzugtes Roaming-Kommunikationsnetz eingestellt und eine Verbindung mit dem zweiten Kommunikationsnetz aufgebaut wird.

In US 2010/0254349 A1 ist ein Verfahren zur Durchführung eines Handover-Vorgangs in einem Drahtlos-Kommunikationssytem beschrieben, bei dem ein mit einer Basis-Station verbundenes erstes mobiles Kommunikationsgerät über eine Nahfeld-Kommunikationsverbindung Netzzugangsinformationen an ein zweites mobiles Kommunikationsgerät übermittelt. Auf Basis dieser Netzzugangsinformationen baut das zweite mobile Kommunikationsgerät eine Kommunikationsverbindung zur Basis-Station auf und tauscht über diese Daten mit dem ersten mobilen Kommunikationsgerät aus.

Der vorliegenden Erfindung liegt die Aufgabe zugrunde, ein Verfahren zum Betrieb eines Kommunikationssystems eines industriellen Automatisierungssystems mit mehreren Funk-Basisstationen zu schaffen, das für eine Echtzeit-Datenübermittlung einen Verbindungswechsel zwischen Funk-Basisstationen ermöglicht, sowie ein geeignetes Kommunikationssystem anzugeben.

Diese Aufgabe wird erfindungsgemäß durch ein Verfahren mit den in Anspruch 1 angegeben Merkmalen und durch ein Kommunikationssystem mit den in Anspruch 11 angegebenen Merkmalen gelöst. Vorteilhafte Weiterbildungen der vorliegenden Erfindung sind in den anhängigen Patentansprüchen angegeben.

Beim erfindungsgemäßen Verfahren zum Betrieb eines Kommunikationssystems eines industriellen Automatisierungssystems, das mehreren Funk-Basisstationen zur Echtzeit-Datenübermittlung umfaßt, baut zumindest ein mobiles Kommunikationsgerät zur Datenübermittlung innerhalb des Kommunikationssystems in einem ersten Bereich des industriellen Automatisierungssystems anhand einer ersten Netzwerkkennung eine Funkverbindung zu einer ersten Funk-Basisstation des Kommunikationssystems auf. Die Funk-Basisstation ist dem ersten Bereich räumlich zugeordnet, und die erste Netzwerkkennung ist der ersten Funk-Basisstation zugeordnet. Das mobile Kommunikationsgerät baut zur Datenübermittlung innerhalb des Kommunikationssystems in einem zweiten Bereich des industriellen Automatisierungssystems anhand einer zweiten Netzwerkkennung eine Funkverbindung zu einer zweiten Funk-Basisstation des Kommunikationssystems auf. Die zweite Funk-Basisstation ist dem zweiten Bereich räumlich zugeordnet ist, und die zweite Netzwerkkennung der zweiten Funk-Basisstation zugeordnet. Bei einem Übergang des mobilen Kommunikationsgeräts vom ersten Bereich in den zweiten Bereich bzw. umgekehrt wird ein Verbindungswechsel zur jeweiligen Funk-Basisstation eingeleitet.

Erfindungsgemäß wird der Verbindungswechsel ausschließlich anhand einer an einer Netzinformationsstation in einem Übergangsbereich zwischen zwei Bereichen bereitgestellten Netzzugangsinformation durch das mobile Kommunikationsgerät eingeleitet. Die Netzzugangsinformation umfaßt zumindest die erste bzw. zweite Netzwerkkennung und wird mittels einer Leseeinheit des mobilen Kommunikationsgeräts an der Netzinformationsstation durch das mobile Kommunikationsgerät erfaßt. Darüber hinaus ist für eine Datenübermittlung zwischen zwei Komponenten des industriellen Automatisierungssystems eine maximale Übermittlungsdauer anhand von Gerätespezifikationen ermittelt. Die ermittelte maximale Übertragungsdauer wird von den Komponenten des industriellen Automatisierungssystems für Steuerungs- bzw. Überwachungsaufgaben als obere Grenze eine Datenübermittlungsvorgangs behandelt. Durch Nutzung der an der Netzinformationsstation bereitgestellten Netzzugangsinformation entfällt bei einem Handover- bzw. Roaming-Vorgang innerhalb des Kommunikationssystems eine zeit- und ressourcenaufwendige Suche durch das mobile Kommunikationsgerät nach verfügbaren Funk-Basisstationen. Während einer solchen Suche können entsprechend bisherigen keine weiteren Funkverbindungen zur Datenübermittlung aufrechterhalten werden. Mit dem erfindungsgemäßen Verfahren wird dieses Problem für ein Echtzeit-Kommunikationssystem gelöst.

Entsprechend einer bevorzugten Ausgestaltung des erfindungsgemäßen Verfahrens erfolgt ein Datenaustausch zwischen dem mobilen Kommunikationsgerät und einer jeweiligen Netzinformationsstation entsprechend Simple Network Management Protocol. Dabei kann die jeweilige Netzinformationsstation beispielsweise als Managementstation mit einem dem mobilen Kommunikationsgerät zugeordneten Agenten zur Steuerung eines Verbindungswechsels kommunizieren. Dies ermöglicht eine besonders zuverlässige Durchführung von Handover- bzw. Roaming-Vorgängen in einem drahtlosen Echtzeit-Kommunikationssystem.

Das erfindungsgemäße Kommunikationssystem eines industriellen Automatisierungssystems umfaßt zumindest eine erste und zweite Funk-Basisstation zur Echtzeit-Datenübermittlung. Dabei ist die erste Funk-Basisstation einem ersten Bereich des industriellen Automatisierungssystems räumlich zugeordnet, während die zweite Funk-Basisstation einem zweiten Bereich des industriellen Automatisierungssystems räumlich zugeordnet ist. Außerdem umfaßt das erfindungsgemäße Kommunikationssystem zumindest ein mobiles Kommunikationsgerät, das eine mit Funk-Basisstationen verbindbare Sende- und Empfangseinheit umfaßt. Das mobile Kommunikationsgerät ist für einen Aufbau einer Funkverbindung zur ersten Funk-Basisstation im ersten Bereich anhand einer ersten Netzwerkkennung eingerichtet, die der ersten Funk-Basisstation zugeordnet ist. Entsprechend ist das mobile Kommunikationsgerät für einen Aufbau einer Funkverbindung zur zweiten Funk-Basisstation im zweiten Bereich anhand einer zweiten Netzwerkkennung eingerichtet, die der zweiten Funk-Basisstation zugeordnet ist. Darüber hinaus umfaßt das mobile Kommunikationsgerät eine der Sende- und Empfangseinheit zugeordnete Verbindungssteuerungseinheit, die für eine Einleitung eines Verbindungswechsels zur jeweiligen Funk-Basisstation bei einem Übergang des mobilen Kommunikationsgeräts vom ersten Bereich in den zweiten Bereich bzw. umgekehrt ausgestaltet ist.

Das mobile Kommunikationsgerät des erfindungsgemäßen Kommunikationssystems umfaßt eine Leseeinheit zum Erfassen von Barcodes, zweidimensionalen Codes oder Funk-Transpondern. An einer Netzinformationsstation ist in einem Übergangsbereich zwischen zwei Bereichen eine durch die Leseeinheit erfaßbare Netzzugangsinformation bereitgestellt ist, die zumindest die erste bzw. zweite Netzwerkkennung umfaßt. Die Netzzugangsinformation kann beispielsweise mittels eines Barcodes, eines zweidimensionalen Codes oder mittels eines Funk-Transponders an der Netzinformationsstation bereitgestellt sein. Des weiteren ist die Verbindungssteuerungseinheit für eine Einleitung eines Verbindungswechsels ausschließlich anhand der Netzzugangsinformation eingerichtet. Vorzugsweise ist eine Erfassung und Verarbeitung von Netzzugangsinformationen von der mit Funk-Basisstationen verbindbaren Sende- und Empfangseinheit des mobilen Kommunikationsgeräts entkoppelt. Für eine Datenübermittlung zwischen zwei Komponenten des industriellen Automatisierungssystems ist eine anhand von Gerätespezifikationen ermittelte maximale Übermittlungsdauer vorgegeben, die eine obere Grenze eines Datenübermittlungsvorgangs bildet. Eine Einleitung eines Verbindungswechsels ausschließlich anhand der an der Netzinformationsstation bereitgestellten Netzzugangsinformation ermöglicht erfindungsgemäß eine echtzeitfähige Durchführung von Handover- bzw. Roaming-Vorgängen, ohne daß gravierende Verbindungsunterbrechungen verursacht werden.

Entsprechend einer vorteilhaften Ausgestaltung der vorliegenden Erfindung umfaßt die Netzzugangsinformation eine räumliche Zuordnung von Funk-Basisstationen zu Bereichen des industriellen Automatisierungssystems und Netzwerkkennungen der Funk-Basisstationen. Zusätzlich kann die Netzzugangsinformation Lokalisierungsinformationen zu Bereichen des industriellen Automatisierungssystems oder zu Funk-Basisstationen umfassen. Vorteilhafterweise umfaßt die Netzzugangsinformation darüber hinaus eine Lokalisierungsinformation zu einer jeweiligen Netzinformationsstation. Dies ermöglicht eine besonders schnelle und zuverlässige Durchführung von Handover- bzw. Roaming-Vorgängen in einem drahtlosen Echtzeit-Kommunikationssystem.

Das mobile Kommunikationsgerät ist entsprechend einer besonders bevorzugten Ausgestaltung der vorliegenden mit einer speicherprogrammierbaren Steuerung verbunden oder in diese integriert. Dabei ist die Leseeinheit des mobilen Kommunikationsgeräts für eine Erfassung einer Netzzugangsinformation bei Passieren einer Netzinformationsstation eingerichtet. Damit ist ein zuverlässiger Ablauf von Automatisierungsprozessen auch während eines Handover- bzw. Roaming-Vorgangs in einem drahtlosen industriellen Kommunikationssystem gewährleistet.

Die Funk-Basisstationen können beispielsweise durch elektrische Leckwellenleiter, wie RCoax-Leitungen, realisiert sein. In diesem Fall sind der erste und zweite Bereich des industriellen Automatisierungssystems Streckenabschnitte entlang zweier elektrischer Leckwellenleiter, die jeweils einen Netzzugangspunkt bilden. Dabei ist auch ein Winkelversatz zwischen aneinander grenzenden Streckenabschnitten möglich. Auf diese Weise kann beispielsweise entlang von Fertigungsstraßen ein funkbasiertes Echtzeit-Kommunikationssystem realisiert werden.

Die vorliegende Erfindung wird an einem Ausführungsbeispiel anhand der Zeichnung näher erläutert. Es zeigt
- Figur 1: eine schematische Darstellung eines herkömmlichen Kommunikationssystems mit einem mobilen Kommunikationsgerät und mehreren Funk-Basisstationen,
- Figur 2: eine schematische Darstellung eines erfindungsgemäßen Kommunikationssystems mit einem mobilen Kommunikationsgerät und mehreren Funk-Basisstationen,
- Figur 3: ein Ablaufdiagramm zur Durchführung eines Verbindungswechsels zwischen Funk-Basisstationen des in Figur 2 dargestellten Kommunikationssystems.

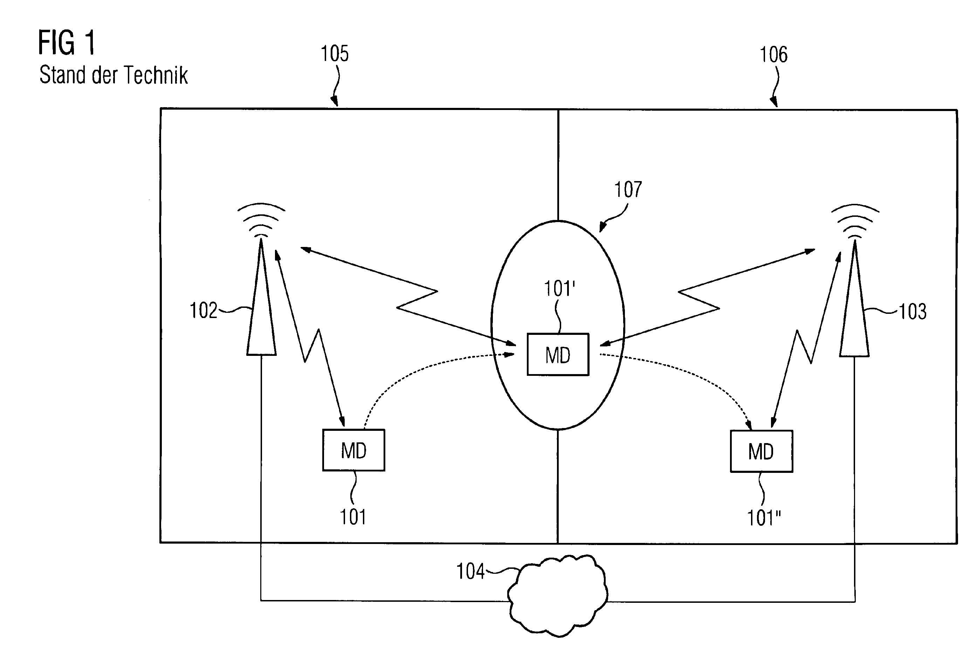

Das in Figur 1 dargestellte herkömmliche Kommunikationssystem umfaßt eine erste 102 und zweite Funk-Basisstation 103, die mit einem Kommunikationsnetz 104 verbunden sind. Die erste Funk-Basisstation 102 stellt eine Funkversorgung in einem ersten Bereich 105 des Kommunikationssystems bereit, während durch die zweite Funk-Basisstation 103 Kommunikationsdienste in einem zweiten Bereich 106 verfügbar gemacht werden. Des weiteren umfaßt das in Figur 1 dargestellte Kommunikationssystem ein mobiles Kommunikationsgerät 101, 101', 101", das im ersten Bereich 105 eine Kommunikationsverbindung zur ersten Funk-Basisstation 102 und im zweiten Bereich 106 eine Kommunikationsverbindung zur zweiten Funk-Basisstation 103 aufbaut. Bewegt sich das mobile Kommunikationsgerät 101, 101', 101" vom ersten Bereich 105 in den zweiten Bereich 106, erfaßt es in einem Übergangsbereich 107 zwischen dem ersten 105 und zweiten Bereich 106 bei geringer werdender Signalqualität der Kommunikationsverbindung zur ersten Funk-Basisstation 102 eine Verfügbarkeit weiterer Funk-Basisstationen. Dabei wird auch eine Signalqualität von Kommunikationsverbindungen zu den weiteren Funk-Basisstationen ermittelt. In Abhängigkeit davon erfolgt im Übergangsbereich 107 ein Verbindungswechsel des mobilen Kommunikationsgeräts 101' zur zweiten Funk-Basisstation 103. Während eines derartigen Verbindungswechsels treten in herkömmlichen Kommunikationssystemen längere Verbindungsunterbrechungen auf, so daß keine Echtzeit-Kommunikation während des Verbindungswechsels gewährleistet ist.

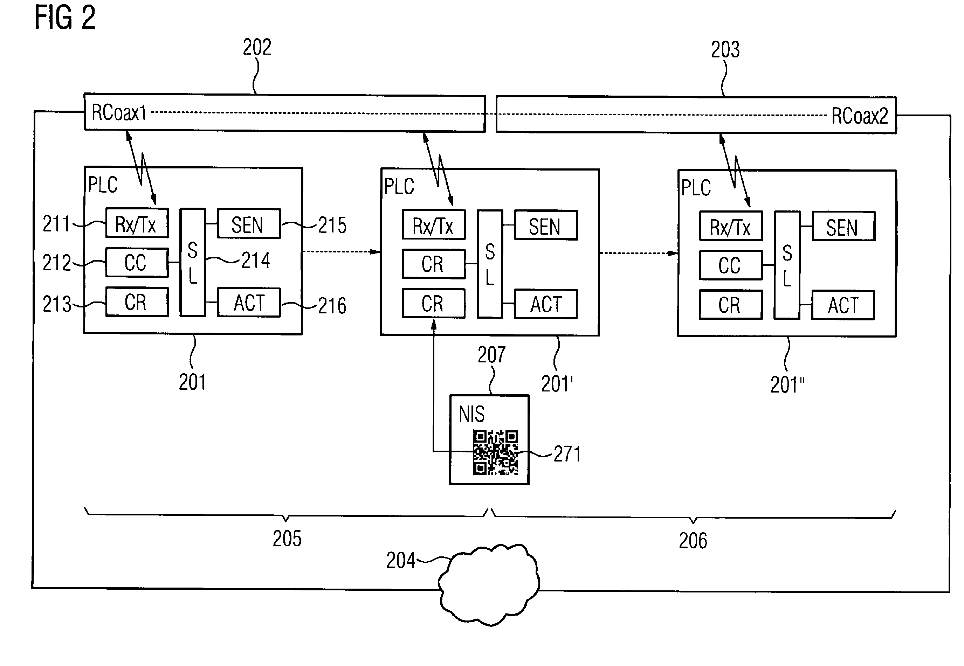

In Figur 2 ist ein Kommunikationssystem eines industriellen Automatisierungssystems dargestellt, das eine erste 202 und zweite Funk-Basisstation 203 zur Echtzeit-Datenübermittlung umfaßt. Beide Funk-Basisstationen 202, 203 sind mit einem industriellen Echtzeit-Kommunikationsnetz 204 verbunden. Die erste Funk-Basisstation 202 ist einem ersten Bereich 205 des industriellen Automatisierungssystems räumlich zugeordnet, während die zweite Funk-Basisstation 203 einem zweiten Bereich 206 des industriellen Automatisierungssystems räumlich zugeordnet ist. Die Funk-Basisstationen 202, 203 sind im vorliegenden Ausführungsbeispiel durch elektrische Leckwellenleiter realisiert, beispielsweise RCoax-Leitungen. Dabei sind der erste 202 und zweite Bereich 203 des industriellen Automatisierungssystems Streckenabschnitte entlang zweier elektrischer Leckwellenleiter, die Netzzugangspunkte für ein mobiles Kommunikationsgerät 201, 201', 201" des in Figur 2 dargestellten Kommunikationssystems bilden.

Das mobile Kommunikationsgerät 201, 201ʹ, 201" ist entlang des ersten 202 und zweiten Bereichs 203 beweglich und umfaßt eine mit den Funk-Basisstationen 202, 203 verbindbare Sende-und Empfangseinheit 211. Darüber hinaus ist das mobile Kommunikationsgerät 201 in eine speicherprogrammierbaren Steuerung integriert, die im vorliegenden Ausführungsbeispiel eine Zentralbaugruppe 214, eine Sensoranschlußeinheit 215 und eine Aktoranschlußeinheit 216 umfaßt.

Das mobile Kommunikationsgerät 201 ist für einen Aufbau einer Funkverbindung zur ersten Funk-Basisstation 202 im ersten Bereich 205 anhand einer ersten Netzwerkkennung eingerichtet, die der ersten Funk-Basisstation 202 zugeordnet ist. In entsprechender Weise ist das mobile Kommunikationsgerät 201" für einen Aufbau einer Funkverbindung zur zweiten Funk-Basisstation 203 im zweiten Bereich 206 anhand einer zweiten Netzwerkkennung eingerichtet, die der zweiten Funk-Basisstation 203 zugeordnet ist.

Die Sende- und Empfangseinheit 211 des mobilen Kommunikationsgeräts 201, 201', 201" ist mit einer Verbindungssteuerungseinheit 212 verbunden, die für eine Einleitung eines Verbindungswechsels zur jeweiligen Funk-Basisstation 202, 203 bei einem Übergang des mobilen Kommunikationsgeräts 201, 201', 201" vom ersten Bereich 205 in den zweiten Bereich 206 und umgekehrt ausgestaltet ist. Die Verbindungssteuerungseinheit 212 ist außerdem mit der Zentralbaugruppe 214 der speicherprogrammierbaren Steuerung und mit einer Leseeinheit 213 zum Erfassen von beispielsweise Barcodes, zweidimensionalen Codes oder Funk-Transpondern verbunden.

An einer Netzinformationsstation 207 in einem Übergangsbereich zwischen dem ersten 205 und dem zweiten Bereich 206 ist eine durch die Leseeinheit 213 erfaßbare Netzzugangsinformation bereitgestellt, welche die erste und zweite Netzwerkkennung umfaßt. Die Netzzugangsinformation wird im vorliegenden Ausführungsbeispiel mittels eines zweidimensionalen QR-Codes 271 bereitgestellt. Alternativ dazu kann die Netzzugangsinformation mittels eines einfachen Barcodes oder mittels eines Funk-Transponders bereitgestellt werden. Die Netzzugangsinformation wird bei Passieren der Netzinformationsstation 207 durch die Leseeinheit 213 des mobilen Kommunikationsgeräts 201' erfaßt.

Ein Datenaustausch zwischen dem mobilen Kommunikationsgerät 201' und der Netzinformationsstation 207 erfolgt vorzugsweise entsprechend Simple Network Management Protocol (SNMP). Dabei agiert die Netzinformationsstation 207 beispielsweise als SNMP-Managementstation und kommuniziert zur Steuerung eines Verbindungswechsels mit einem dem mobilen Kommunikationsgerät 201' zugeordneten SNMP-Agenten, der durch die Verbindungssteuerungseinheit 212 implementiert wird.

Neben der ersten und zweiten Netzwerkkennung umfaßt die Netzzugangsinformation vorzugsweise eine räumliche Zuordnung von Funk-Basisstationen zu Bereichen des industriellen Automatisierungssystems, Lokalisierungsinformationen zu Bereichen des industriellen Automatisierungssystems bzw. zu Funk-Basisstationen sowie eine Lokalisierungsinformationen der Netzinformationsstation 207. Mit diesen Informationen ist eine besonders schnelle Durchführung eines Verbindungswechsels möglich.

Die Verbindungssteuerungseinheit 212 des mobilen Kommunikationsgeräts 201, 201', 201" ist für eine Einleitung eines Verbindungswechsels ausschließlich anhand der Netzzugangsinformation eingerichtet. Dabei ist eine Erfassung und Verarbeitung der Netzzugangsinformation von der mit den Funk-Basisstationen 202, 203 verbindbaren Sende- und Empfangseinheit 211 des mobilen Kommunikationsgeräts 201, 201ʹ, 201ʹʹ vollständig entkoppelt. Für eine Datenübermittlung zwischen zwei Komponenten des industriellen Automatisierungssystems ist eine anhand von Gerätespezifikationen ermittelte maximale Übermittlungsdauer vorgegeben, die eine obere Grenze eines Datenübermittlungsvorgangs bildet und dementsprechend von den Komponenten des industriellen Automatisierungssystems für Steuerungs- bzw. Überwachungsaufgaben als obere Grenze eine Datenübermittlungsvorgangs behandelt wird.

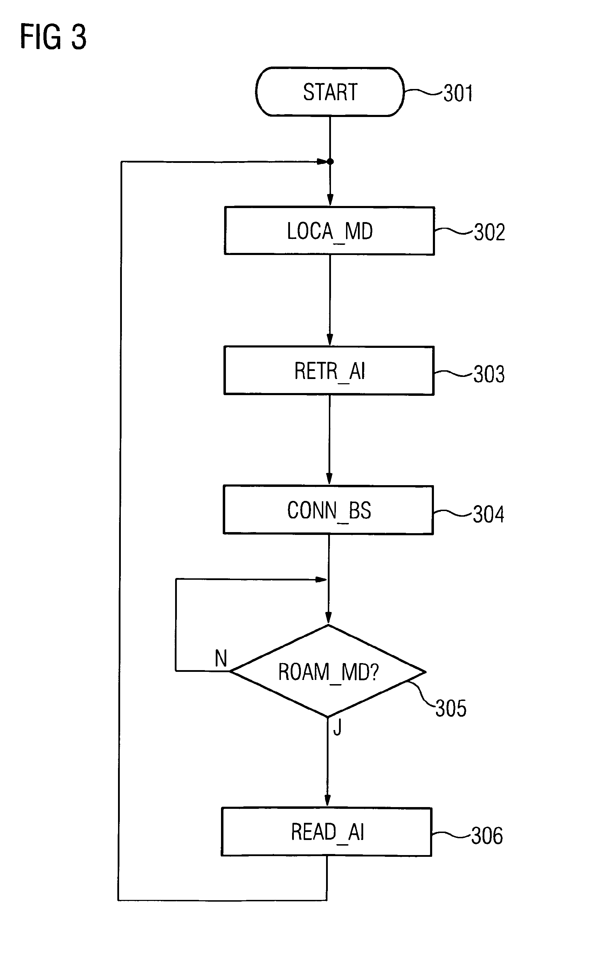

Ausgangspunkt des in Figur 3 dargestellten Ablaufdiagramms zur Durchführung eines Verbindungswechsels zwischen Funk-Basisstationen 202, 203 des in Figur 2 dargestellten Kommunikationssystems ist zunächst ein Start des jeweiligen mobilen Kommunikationsgeräts 201, 201', 201" entsprechend Schritt 301. Anschließend erfolgt entsprechend Schritt 302 eine Lokalisierung des mobilen Kommunikationsgeräts 201, 201', 201" sowie eine Abfrage von im mobilen Kommunikationsgerät 201, 201', 201" gespeicherten Netzzugangsinformationen entsprechend Schritt 303. Anhand der abgefragten Netzzugangsinformationen wird dann in Schritt 304 eine Funkverbindung zu einer für das mobile Kommunikationsgerät 201, 201', 201" im jeweiligen Bereich 205, 206 des industriellen Automatisierungssystems verfügbaren Funk-Basisstation 202, 203 aufgebaut. Nachfolgend überwacht sich das mobile Kommunikationsgerät 201, 201', 201" entsprechend Schritt 305 fortlaufend auf einen Übergang von einem Bereich des industriellen Automatisierungssystems in einen anderen Bereich. Ein Übergang zwischen zwei Bereichen wird entsprechend obigen Ausführungen bei Passieren einer Netzinformationsstation 207 detektiert.

Bei Passieren einer Netzinformationsstation 207 erfaßt das mobile Kommunikationsgerät 201, 201', 201" entsprechend Schritt 306 eine dort bereitgestellte Netzzugangsinformation und speichert diese. Anschließend erfolgt eine erneute Ausführung der Schritte 302-306, die in einem Verbindungswechsel des mobilen Kommunikationsgeräts 201, 201', 201" zu einer neuen Funk-Basisstation resultieren. Entsprechend obigen Ausführungen erfolgt der Verbindungswechsel ausschließlich anhand einer an einer Netzinformationsstation 207 bereitgestellten Netzzugangsinformation.

Die Merkmale der vorangehend beschriebenen Ausführungsbeispiele können sowohl einzeln als auch in beschriebener Kombination miteinander realisiert sein.

## Patentansprüche

1. Verfahren zum Betrieb eines Kommunikationssystems eines industriellen Automatisierungssystems mit mehreren Funk-Basisstationen zur Echtzeit-Datenübermittlung, bei dem
- zumindest ein mobiles Kommunikationsgerät zur Datenübermittlung innerhalb des Kommunikationssystems in einem ersten Bereich des industriellen Automatisierungssystems anhand einer ersten Netzwerkkennung eine Funkverbindung zu einer ersten Funk-Basisstation des Kommunikationssystems aufbaut, die dem ersten Bereich räumlich zugeordnet ist, wobei die erste Netzwerkkennung der ersten Funk-Basisstation zugeordnet ist,
- das mobile Kommunikationsgerät zur Datenübermittlung innerhalb des Kommunikationssystems in einem zweiten Bereich des industriellen Automatisierungssystems anhand einer zweiten Netzwerkkennung eine Funkverbindung zu einer zweiten Funk-Basisstation des Kommunikationssystems aufbaut, die dem zweiten Bereich räumlich zugeordnet ist, wobei die zweite Netzwerkkennung der zweiten Funk-Basisstation zugeordnet ist,
- bei einem Übergang des mobilen Kommunikationsgeräts vom ersten Bereich in den zweiten Bereich und/oder umgekehrt ein Verbindungswechsel zur jeweiligen Funk-Basisstation eingeleitet wird,
**dadurch gekennzeichnet,**
**daß** der Verbindungswechsel ausschließlich anhand einer an einer Netzinformationsstation in einem Übergangsbereich zwischen zwei Bereichen bereitgestellten Netzzugangsinformation durch das mobile Kommunikationsgerät eingeleitet wird, wobei die Netzzugangsinformation zumindest die erste und/oder zweite Netzwerkkennung umfaßt und mittels einer Leseeinheit des mobilen Kommunikationsgeräts an der Netzinformationsstation durch das mobile Kommunikationsgerät erfaßt wird,
und **daß** für eine Datenübermittlung zwischen zwei Komponenten des industriellen Automatisierungssystems eine maximale Übermittlungsdauer anhand von Gerätespezifikationen ermittelt wird,
und **daß** die ermittelte maximale Übertragungsdauer von den Komponenten des industriellen Automatisierungssystems für Steuerungs- und/oder Überwachungsaufgaben als obere Grenze eines Datenübermittlungsvorgangs behandelt wird.

2. Verfahren nach Anspruch 1,
bei dem die Netzzugangsinformation eine räumliche Zuordnung von Funk-Basisstationen zu Bereichen des industriellen Automatisierungssystems und Netzwerkkennungen der Funk-Basisstationen umfaßt.

3. Verfahren nach einem der Ansprüche 1 oder 2,
bei dem die Netzzugangsinformation Lokalisierungsinformationen zu Bereichen des industriellen Automatisierungssystems oder zu Funk-Basisstationen umfaßt.

4. Verfahren nach einem der Ansprüche 1 bis 3,
bei dem die Netzzugangsinformation eine Lokalisierungsinformationen zu einer jeweiligen Netzinformationsstation umfaßt.

5. Verfahren nach einem der Ansprüche 1 bis 4,
bei dem die Netzzugangsinformation mittels eines Barcodes, eines zweidimensionalen Codes oder mittels eines Funk-Transponders an der Netzinformationsstation bereitgestellt wird.

6. Verfahren nach einem der Ansprüche 1 bis 5,
bei dem ein Datenaustausch zwischen dem mobilen Kommunikationsgerät und einer jeweiligen Netzinformationsstation entsprechend Simple Network Management Protocol erfolgt.

7. Verfahren nach Anspruch 6,
bei dem die jeweilige Netzinformationsstation als Managementstation mit einem dem mobilen Kommunikationsgerät zugeordneten Agenten zur Steuerung eines Verbindungswechsels kommuniziert.

8. Verfahren nach einem der Ansprüche 1 bis 7,
bei dem eine Erfassung und Verarbeitung von Netzzugangsinformationen von einer mit Funk-Basisstationen verbindbaren Sende- und Empfangseinheit des mobilen Kommunikationsgeräts entkoppelt ist.

9. Verfahren nach einem der Ansprüche 1 bis 8,
bei dem das mobile Kommunikationsgerät mit einer speicherprogrammierbaren Steuerung verbunden oder in diese integriert ist, und bei dem eine Netzzugangsinformation bei Passieren einer Netzinformationsstation durch die Leseeinheit des mobilen Kommunikationsgeräts erfaßt wird.

10. Verfahren nach einem der Ansprüche 1 bis 9,
bei dem die Funk-Basisstationen durch elektrische Leckwellenleiter realisiert sind, und bei dem der erste und zweite Bereich des industriellen Automatisierungssystems Streckenabschnitte entlang zweier elektrischer Leckwellenleiter sind, die jeweils einen Netzzugangspunkt bilden.

11. Kommunikationssystem eines industriellen Automatisierungssystems mit
- zumindest einer ersten und zweiten Funk-Basisstation zur Echtzeit-Datenübermittlung, wobei die erste Funk-Basisstation einem ersten Bereich des industriellen Automatisierungssystems räumlich zugeordnet ist, wobei die zweite Funk-Basisstation einem zweiten Bereich des industriellen Automatisierungssystems räumlich zugeordnet ist,
- zumindest einem mobilen Kommunikationsgerät, das eine mit Funk-Basisstationen verbindbare Sende- und Empfangseinheit umfaßt,
wobei das mobile Kommunikationsgerät für einen Aufbau einer Funkverbindung zur ersten Funk-Basisstation im ersten Bereich anhand einer ersten Netzwerkkennung eingerichtet ist, die der ersten Funk-Basisstation zugeordnet ist, und
wobei das mobile Kommunikationsgerät für einen Aufbau einer Funkverbindung zur zweiten Funk-Basisstation im zweiten Bereich anhand einer zweiten Netzwerkkennung eingerichtet ist, die der zweiten Funk-Basisstation zugeordnet ist, und
wobei das mobile Kommunikationsgerät eine der Sende-und Empfangseinheit zugeordnete Verbindungssteuerungseinheit umfaßt, die für eine Einleitung eines Verbindungswechsels zur jeweiligen Funk-Basisstation bei einem Übergang des mobilen Kommunikationsgeräts vom ersten Bereich in den zweiten Bereich und/oder umgekehrt ausgestaltet ist,
**dadurch gekennzeichnet,**
**daß** das mobile Kommunikationsgerät eine Leseeinheit zum Erfassen von Barcodes, zweidimensionalen Codes oder Funk-Transpondern umfaßt,
und **daß** an einer Netzinformationsstation in einem Übergangsbereich zwischen zwei Bereichen eine durch die Leseeinheit erfaßbare Netzzugangsinformation bereitgestellt ist, die zumindest die erste und/oder zweite Netzwerkkennung umfaßt, wobei die Verbindungssteuerungseinheit für eine Einleitung eines Verbindungswechsels ausschließlich anhand der Netzzugangsinformation eingerichtet ist,
und **daß** für eine Datenübermittlung zwischen zwei Komponenten des industriellen Automatisierungssystems eine anhand von Gerätespezifikationen ermittelte maximale Übermittlungsdauer vorgegeben ist, die eine obere Grenze eines Datenübermittlungsvorgangs bildet.

12. Verfahren nach Anspruch 11,
bei dem die Netzzugangsinformation eine räumliche Zuordnung von Funk-Basisstationen zu Bereichen des industriellen Automatisierungssystems und Netzwerkkennungen der Funk-Basisstationen umfaßt.

13. Verfahren nach einem der Ansprüche 11 oder 12,
bei dem die Netzzugangsinformation Lokalisierungsinformationen zu Bereichen des industriellen Automatisierungssystems oder zu Funk-Basisstationen umfaßt.

14. Verfahren nach einem der Ansprüche 11 bis 13,
bei dem die Netzzugangsinformation eine Lokalisierungsinformation zu einer jeweiligen Netzinformationsstation umfaßt.

15. Verfahren nach einem der Ansprüche 11 bis 14,
bei dem die Netzzugangsinformation mittels eines Barcodes, eines zweidimensionalen Codes oder mittels eines Funk-Transponders an der Netzinformationsstation bereitgestellt ist.

16. Verfahren nach einem der Ansprüche 11 bis 15,
bei dem eine Erfassung und Verarbeitung von Netzzugangsinformationen von der mit Funk-Basisstationen verbindbaren Sende-und Empfangseinheit des mobilen Kommunikationsgeräts entkoppelt ist.

17. Verfahren nach einem der Ansprüche 1 bis 16,
bei dem das mobile Kommunikationsgerät mit einer speicherprogrammierbaren Steuerung verbunden oder in diese integriert ist, und bei dem die Leseeinheit des mobilen Kommunikationsgeräts für eine Erfassung einer Netzzugangsinformation bei Passieren einer Netzinformationsstation eingerichtet ist.

18. Verfahren nach einem der Ansprüche 1 bis 17,
bei dem die Funk-Basisstationen durch elektrische Leckwellenleiter realisiert sind, und bei dem der erste und zweite Bereich des industriellen Automatisierungssystems Streckenabschnitte entlang zweier elektrischer Leckwellenleiter sind, die jeweils einen Netzzugangspunkt bilden.
